# EUROPÄISCHE PATENTSCHRIFT

(11) **EP 2 007 658 B1**
(45) Veröffentlichungstag und Bekanntmachung des Hinweises auf die Patenterteilung: **02.12.2009**
(21) Anmeldenummer: 06724741.1
(22) Anmeldetag: 06.05.2006
(51) Int. Cl.: B65G 1/04

(54) **LAGERLIFT**
STORAGE LIFT
ASCENSEUR D'ENTREPÔT

(30) Priorität: 15.04.2006 DE 202006006539 U
(43) Veröffentlichungstag der Anmeldung: 31.12.2008
(73) Patentinhaber: Bellheimer Metallwerk GmbH, 76756 Bellheim (DE)
(72) Erfinder: BRAUN, Mathias, 35410 Hungen-Langd (DE); REISSIG, Jürgen, 35043 Marburg (DE)
(74) Vertreter: Grünecker, Kinkeldey, Stockmair & Schwanhäusser Anwaltssozietät
(86) Internationale Anmeldenummer: PCT/EP2006/004246
(87) Internationale Veröffentlichungsnummer: WO 2007/118493

(56) Entgegenhaltungen:
- DE-A1- 4 423 545
- DE-U1-202005 017 269
- GB-A- 777 989
- US-A- 3 913 766
- US-A- 5 361 481

## Beschreibung

Die Erfindung betrifft einen Lagerlift mit mehreren nebeneinander- und sich beidseits eines Förderschachtes jeweils gegenüberliegenden Regalsäulen, deren Seitenwände mit in geringem Abstand voneinander, übereinander angeordneten Auflagestegen zur Abstützung von Lagergutträgern versehen sind, mit einem im Förderschacht vertikal und horizontal verfahrbaren mit einer Horizontalfördereinrichtung versehenen, in einem Tragrahmen geführten Förderer, durch den Lagergutträger von mindestens einer sich in einer Regalsäule befindenden Beschickungs- und Entnahmeöffnung in Lagerplätze der Regalsäulen überführ- und aus ihnen zurücktransportierbar sind, sowie mit jeweils einem im Bereich der Beschickungs- und Entnahmeöffnung vorgesehenen Lichtgitter zur Ermittlung der Höhe des höhenoptimiert einzulagernden Lagergutes. Ein derartiger Lagerlift gemäß dem Oberbegriff des Anspruchs ist bereits aus der DE 20 2005 017 296 U1 bekannt.

### Stand der Technik

Ein Lagerlift der vorstehenden Art ist aus der Firmendruckschrift Shuttle XP und Shuttle Xplus mit "Optiflex", Shut/D/3/2000/06.04/BO-GWD bekannt. Bei dem bekannten Lagerlift ist der sich über die gesamte Länge des Förderschachtes erstreckende Tragrahmen im Bereich der sich gegenüberliegenden Stirnwände des Gehäuses des Lagerliftes an vertikalen Führungsschienen auf- und abbewegbar gelagert und seine in Längsrichtung des Förderschachtes verlaufenden Längsschenkel bilden Führungsschienen für den horizontal auf dem Tragrahmen verfahrbaren Förderer, der das Lagergut in aus der DE 42 33 688 C2 bekannter Art und Weise unter optimaler Ausnutzung des zur Verfügung stehenden Stauraumes, d. h. höhenoptimiert, einlagert und auch wieder auslagert. Es versteht sich, dass mit zunehmender Zahl nebeneinander angeordneter Paare von Regalsäulen, insbesondere im Falle der Einlagerung schwerer Güter, die Biegebelastungen der Längsschenkel des Tragrahmens erhebliche Werte annehmen und dass diesem Umstand durch die Vergrößerung der Querschnitte oder durch Hilfskonstruktionen der in der DE 20 2005 017 269 U1 offenbarten Art Rechnung getragen werden muss. In jedem Fall nimmt der Anteil des Gewichtes des vertikal verfahrbaren Rahmens an der beim Einlagern von Lagergut insgesamt anzuhebenden Last mit steigender Zahl der nebeneinander angeordneten Regalsäulenpaare deutlich zu. Dies bedeutet nicht mehr und nicht weniger als einen unerwünscht hohen Anstieg sowohl der Herstellungs- als auch der zum Betrieb des Lagerliftes erforderlichen Energiekosten.

### Darstellung der Erfindung

Der Erfindung liegt die Aufgabe zugrunde, bei einem Lagerlift der in Betracht gezogenen Gattung die zum Ein- und Auslagern des Fördergutes verwendeten Mittel so zu gestalten, dass ihre Abmessungen und Herstellungskosten nicht von der Zahl der nebeneinander angeordneten Regalsäulen abhängen.

Gelöst wird die gestellte Aufgabe bei einem Regal der eingangs definierten Gattung erfindungsgemäß dadurch, dass der Förderer in an sich bekannter Weise auf- und abbewegbar im Tragrahmen gelagert ist und dieser in ebenfalls an sich bekannter Weise seinerseits horizontal verfahrbar an mindestens zwei Führungsschienen geführt ist, von denen eine fest mit dem Boden des Förderschachtes verbunden und eine im oberen Bereich des Förderschachtes angeordnet ist, dass die Regalsäulen jeweils vier Eckpfosten aufweisen und dass mindestens einige der oberen Enden der Eckpfosten sich gegenüberliegender Regalsäulen durch den Förderschacht überbrückende Querträger miteinander verbunden sind, die zur Befestigung der oberen Führungsschiene zur Führung des Tragrahmens dienen.

Da die den Tragrahmen unten abstützende Führungsschiene mit dem Boden des Förderschachtes, d. h. dem Boden des Aufstellungsortes, verbunden ist, nimmt dieser das gesamte Gewicht des Tragrahmens auf. Die zum horizontalen Verfahren des Tragrahmens erforderlichen Kräfte halten sich folglich in engen Grenzen. Da die Abmessungen des Tragrahmens nicht von der Länge des Förderschachtes abhängen, lässt sich die Zahl der zu beschickenden Regalsäulen problemlos an die Bedürfnisse des Anwenders anpassen. Horizontal verfahrbare Tragrahmen mit einem auf- und abbewegbaren Förderer sind bei offenen Regalssystemen seit längerem bereits im Einsatz. Sie weisen mindestens zwei Vertikalträger sowie zwei diese oben und unten miteinander verbindende, in Richtung ihrer Verfahrbewegung verlaufende Horizontalträger auf und ihre Vertikalträger sind mit Führungen für den zwischen ihnen auf- und abbewegbaren, das Lagergut tragenden Förderer versehen. Der Grund dafür, dass horizontal verfahrbare Tragrahmen bisher nicht in geschlossene Gehäuse aufweisenden Lagerliften Verwendung gefunden haben, dürfte in dem Raumbedarf der Vertikalträger und der außerhalb der Vertikalträger liegenden Antriebsorgane für den Tragrahmen zu suchen sein. Dieser zusätzliche Raumbedarf steht nicht im Einklang mit der bei Lagerliften üblichen Praxis, die an den Enden des Förderschachtes angeordneten Gehäusewände mehr oder weniger fluchtend mit den seitlichen Außenwänden der jeweils letzten Regalsäulen einer Regalsäulenreihe auszubilden, um den für den Lagerlift zur Verfügung stehenden Raum optimal mit Lagergut nutzen zu können. Wie sich jedoch herausgestellt hat, wird der mit dem Einsatz des beschriebenen Tragrahmens verbundene Verlust an Stauraum durch die Vorteile, die der horizontal verfahrbare Tragrahmen bietet, allemal aufgewogen. Dies gilt in besonderem Maße dann, wenn die die gegenüberliegenden Enden des Förderschachtes abschließenden Teile des Gehäuses als Wartungsschächte ausgebildet sind, in die der ihnen jeweils zugewandte Vertikalträger des Tragrahmens verfahrbar ist.

Weitere Merkmale und Einzelheiten des erfindungsgemäßen Lagerliftes ergeben sich aus den Unteransprüchen und der nachstehenden Beschreibung einer in den beigefügten schematischen Zeichnungen dargestellten Ausführungsform.

### Kurze Beschreibung der Zeichnungen

Es zeigen:

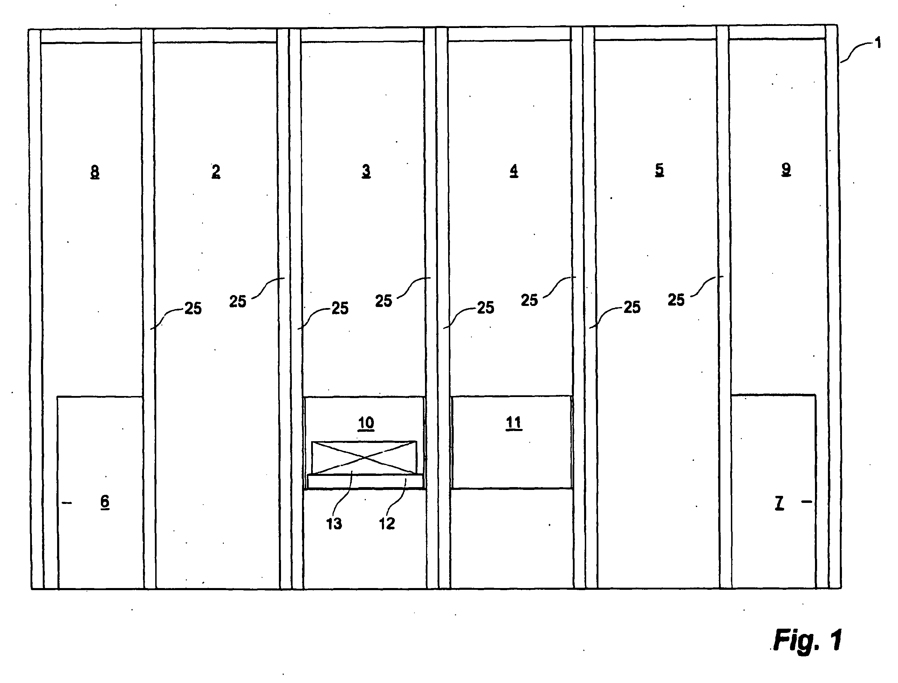

- Fig. 1: die Vorderansicht eines Lagerliftes mit vier nebeneinander angeordneten Paaren von Regalsäulen,

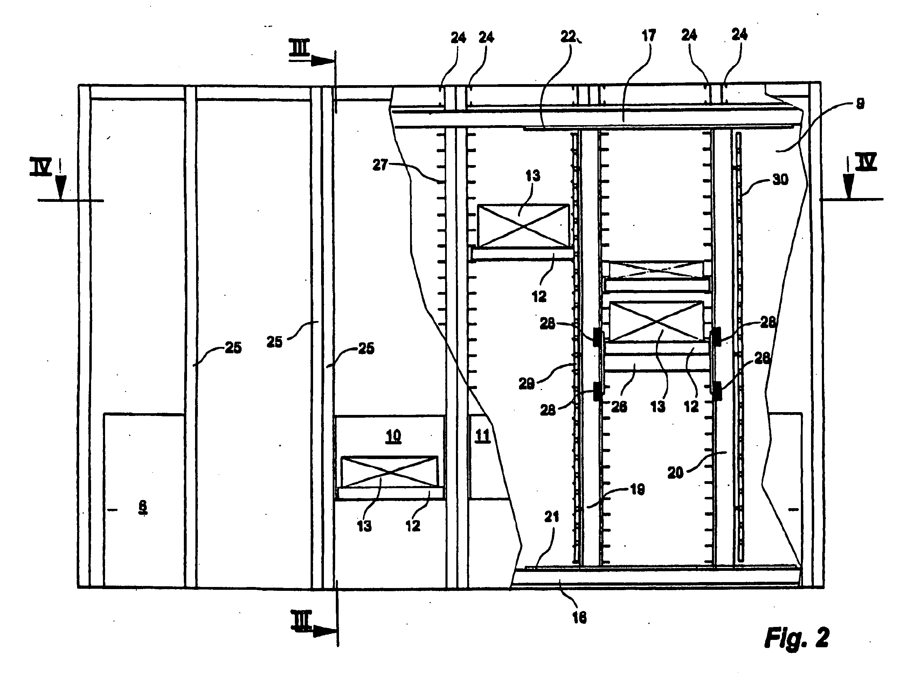

- Fig. 2: eine der Fig. 1 entsprechende Vorderansicht mit einem partiell aufgebrochenen Teil des Gehäuses des Lagerliftes,
- Fig. 3: einen Schnitt längs der Linie III - III in Fig. 2 und

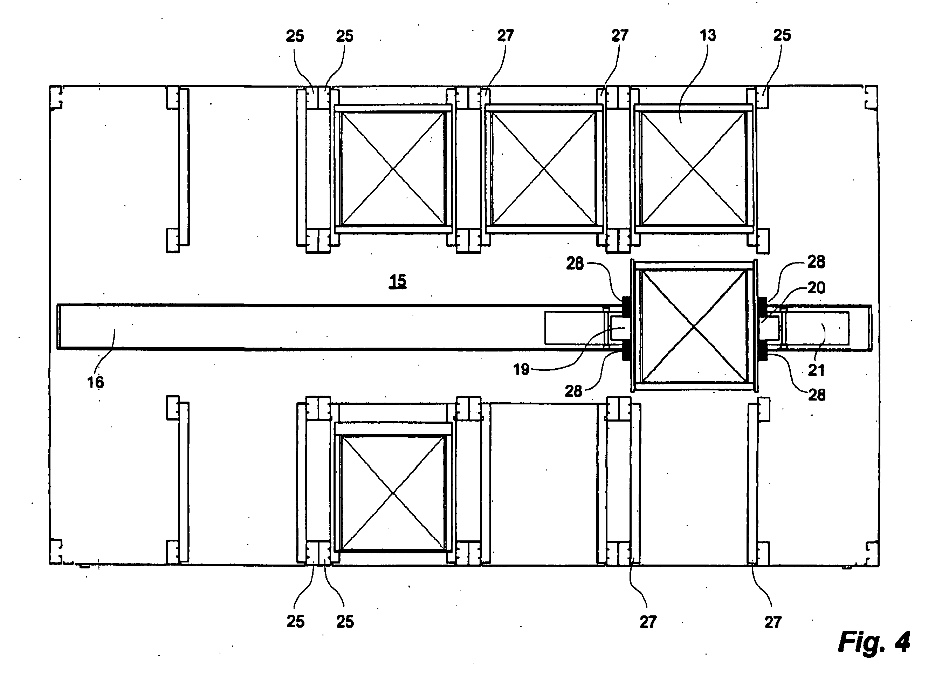

- Fig. 4: einen Schnitt längs der Linie IV - IV in Fig. 3.

### Wege zur Ausführung der Erfindung

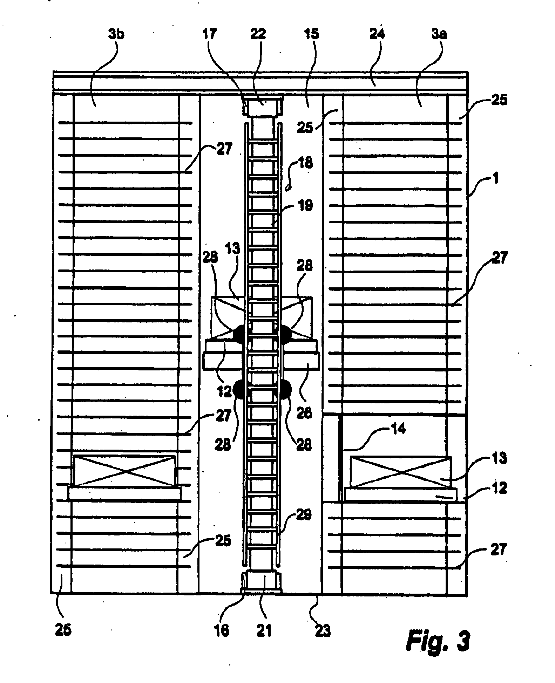

In den Figuren ist 1 das Gehäuse eines Lagerliftes mit vier Regalsäulenpaaren 2, 3, 4 und 5. Der Lagerlift ist modular aufgebaut, d. h. er besteht weitgehend aus Komponenten, die auch bei bekannten Einzellagerliften Verwendung finden. Die seitlichen Teile des Gehäuses 1 bilden durch Türen 6, 7 zugängliche Wartungsschächte 8 und 9. Die vorderen Regalsäulen 3a und 4a der Regalsäulenpaare 3 und 4 sind mit jeweils einer Beschickungs- und Entnahmeöffnung 10, 11 für ein- und auszulagemde Lagergutträger 12 mit Lagergut 13 unterschiedlicher Höhe versehen. Wie in Figur 3 angedeutet, sind die Beschickungs- und Entnahmeöffnungen mit einem Lichtgitter 14 ausgestattet, mit dessen Hilfe die Höhe des jeweils einzulagernden Lagergutes 13 ermittelt wird. Durch eine geeignete Erkennungs- und Verwaltungssoftware wird sichergestellt, dass die Einlagerung des Lagergutes 13 so erfolgt, dass der in den Regalsäulen 2 bis 5 zur Verfügung stehende Stauraum optimal genutzt wird.

Die Regalsäulenpaare 2 - 5 begrenzen - wie anhand der Regalsäulen 3a und 3b des Regalsäulenpaares 3 in Figur 3 gezeigt - einen Förderschacht 15, der sich bis in den Bereich der Wartungsschächte 8 und 9 erstreckt. In dem Förderschacht 15 ist mittels einer unteren Führungsschiene 16 und einer oberen Führungsschiene 17 ein Tragrahmen 18 geführt, der aus zwei Vertikalträgern 19, 20 und zwei in Längsrichtung des Förderschachtes 15 verlaufenden Horizontalträgem 21, 22 besteht. Während die untere Führungsschiene 16 mittels Dübeln fest mit dem Boden 23 des Aufstellungsortes verbunden ist, wird die obere Führungsschiene 17 von Querträgern 24 gehalten, die die oberen Enden von Eckpfosten 25 der Regalsäulen 2 - 5 miteinander verbinden.

An den Vertikalträgern 19, 20 ist auf- und abbewegbar ein auch als Extraktor bezeichneter Förderer 26 geführt, der in bekannter Weise mit einer Horizontalfördereinrichtung ausgestattet ist, mit deren Hilfe Lagergutträger 12 ein- und ausgelagert werden können. Die jeweiligen Lagerplätze sind, wie aus der eingangs erwähnten DE 42 33 688 C2 bekannt, frei wählbar. Sie werden von Auflagestegen 27 gebildet, die in das Innere der Regalsäulen 2 bis 5 ragen und deren Abstand voneinander kleiner als die Höhe der Lagergutträger 12 ist. Dieser Abstand beträgt in der Praxis maximal 50 mm.

Der Förderer 26 ist an seinen sich gegenüberliegenden Seiten mit jeweils vier Führungsrollen 28 versehen, mit deren Hilfe er sich an den Vertikalträgern 19, 20 des Tragrahmens 18 abstützt.

Die Wartungsschächte 8, 9 erlauben es, auf den sich gegenüberliegenden, in die Wartungsschächte 8, 9 überführbaren Seiten des Tragrahmens 18 Leitern 29, 30 anzubringen, die die Durchführung der Wartungsarbeiten erleichtern.

## Patentansprüche

1. Lagerlift mit mehreren nebeneinander- und sich beidseits eines Förderschachtes (15) jeweils gegenüberliegenden Regalsäulen (2 - 5), deren Seitenwände mit in geringem Abstand voneinander, übereinander angeordneten Auflagestegen (27) zur Abstützung von Lagergutträgern (12) versehen sind, mit einem im Förderschacht (15) vertikal und horizontal verfahrbaren mit einer Horizontalfördereinrichtung versehenen, in einem Tragrahmen (18) geführten Förderer (26), durch den Lagergutträger (12) von mindestens einer sich in einer Regalsäule befindenden Beschickungs- und Entnahmeöffnung (10, 11) in Lagerplätze der Regalsäulen (2 - 5) überführ- und aus ihnen zurücktransportierbar sind, sowie mit jeweils einem im Bereich der Beschickungs- und Entnahmeöffnungen (10, 11) vorgesehenen Lichtgitter (14) zur Ermittlung der Höhe des höhenoptimiert einzulagernden Lagergutes (13), **dadurch gekennzeichnet, dass** der Förderer (26) in an sich bekannter Weise auf- und abbewegbar im Tragrahmen (18) gelagert ist und dieser in ebenfalls an sich bekannter Weise seinerseits horizontal verfahrbar an mindestens zwei Führungsschienen (16, 17) geführt ist, von denen eine (16) fest mit dem Boden (23) des Förderschachtes (15) verbunden und eine (17) im oberen Bereich des Förderschachtes (15) angeordnet ist und dass die Regalsäulen (2 - 5) jeweils vier Eckpfosten (25) aufweisen und dass mindestens einige der oberen Enden der Eckpfosten (25) sich gegenüberliegender Regalsäulen (z. B. 3a, 3b) durch den Förderschacht (15) überbrückende Querträger (24) miteinander verbunden sind, die zur Befestigung der oberen Führungsschiene (17) zur Führung des Tragrahmens (18) dienen .

2. Lagerlift nach Anspruch 1, **dadurch gekennzeichnet, dass** der Tragrahmen (18) mindestens zwei Vertikalträger (19, 20) sowie zwei diese oben und unten miteinander verbindende, in Längsrichtung des Förderschachtes (15) verlaufende Horizontalträger (21, 22) aufweist und dass die Vertikalträger (19, 20) mit Führungen für den zwischen ihnen auf- und abbewegbaren, das Lagergut (13) tragenden Förderer (26) versehen sind.

3. Lagerlift nach Anspruch 2, **dadurch gekennzeichnet, dass** gegenüberliegende Enden des Förderschachtes (15) abschließende Teile eines Gehäuses (1) als Wartungsschächte (8, 9) ausgebildet sind, in die der ihnen jeweils zugewandte Vertikalträger (19 bzw. 20) des Tragrahmens (18) verfahrbar ist.

4. Lagerlift nach Anspruch 3, **dadurch gekennzeichnet, dass** die Wartungsschächte (8, 9) sich über die gesamte Höhe und Tiefe des Gehäuses (1) erstrecken.

5. Lagerlift nach Anspruch 3 oder 4, **dadurch gekennzeichnet, dass** der Tragrahmen (18) an mindestens einer seiner den Wartungsschächten (8, 9) zugewandten Seiten mit einer sich über annähernd die gesamte Höhe des Gehäuses (1) erstreckenden, in den Bereich eines Wartungsschachtes (8 bzw. 9) überführbaren Leiter (29, 30) versehen ist.

6. Lagerlift nach einem der Ansprüche 1 bis 5, **dadurch gekennzeichnet, dass** er beliebig viele nebeneinander angeordnete Paare sich gegenüberliegender Regalsäulen (2 - 5) aufweist.

7. Lagerlift nach einem der Ansprüche 2 bis 6, **dadurch gekennzeichnet, dass** der Förderer (26) sich an seinen sich gegenüberliegenden Seiten über mindestens jeweils zwei im Abstand voneinander übereinander angeordnete Paare von Führungsrollen (28) an den Vertikalträgern (19, 20) abstützt.

## Claims

1. A storage lift comprising a plurality of shelf columns (2 - 5) which lie next to one another and opposite to one another on both sides of a conveying shaft (15), wherein side walls of the shelf columns (2 - 5) are provided with support webs (27) arranged at a small distance from each other and one above another for supporting storage goods carriers (12), with a conveyor (26), which is vertically and horizontally movable in the conveying shaft (15) and provided with a horizontal conveying means and guided in a support frame (18) and by means of which storage goods carriers (12) can be transported from at least one feeding and retrieving opening (10, 11) positioned in a shelf column to and back from storage places of the shelf columns (2 - 5), and with a light grid (14) provided in each case in the region of the feeding and retrieving openings (10, 11) for determining the height of the storage goods (13) to be stored in a height-optimized way, **characterized in that** the conveyor (26) is supported in a manner known in principle to be movable upwards and downwards in the support frame (18) and that said support frame (18), on its part, is also guided in a manner known in principle to be movable in horizontal direction on at least two guide rails (16, 17), of which one (16) is connected fixedly to the base (23) of the conveying shaft (15) and one (17) is arranged in the upper region of the conveying shaft (15), and that each of the shelf columns (2 - 5) has four corner posts (25) and that at least some of the upper ends of the corner posts (25) of opposing shelf columns (e.g. 3a, 3b) are interconnected by transverse beams (24) bridging the conveying shaft (15), which serve to fasten the upper guide rail (17) for guiding the support frame (18).

2. The storage lift according to claim 1, **characterized in that** the support frame (18) comprises at least two vertical carriers (19, 20) and two horizontal carriers (21, 22) interconnecting said vertical carriers (19, 20) at the top and bottom and running in the longitudinal direction of the conveying shaft (15) and that the vertical carriers (19, 20) are provided with guides for the conveyor (26) which is movable upwards and downwards thereinbetween and carries the storage goods (13).

3. The storage lift according to claim 2, **characterized in that** the parts of a housing (1) closing opposing ends of the conveying shaft (15) are configured as maintenance shafts (8, 9) into which the vertical carrier (19 or 20) of the support frame (18) which respectively faces said shafts (8, 9) is movable.

4. The storage lift according to claim 3, **characterized in that** the maintenance shafts (8, 9) extend over the whole height and depth of the housing (1).

5. The storage lift according to claim 3 or 4, **characterized in that** the support frame (18) is provided on at least one of its sides facing the maintenance shafts (8, 9) with a ladder (29, 30) which extends over approximately the whole height of the housing (1) and can be transferred into the region of a maintenance shaft (8 or 9, respectively).

6. The storage lift according to any one of claims 1 to 5, **characterized in that** it comprises any desired number of adjacently arranged pairs of opposing shelf columns (2 - 5).

7. The storage lift according to any one of claims 2 to 6, **characterized in that** the conveyor (26) is supported on the vertical carriers (19, 20) at its opposing sides via at least two pairs of guide rolls (28) which are spaced-apart and arranged one above another, respectively.

## Revendications

1. Ascenseur d'entrepôt avec plusieurs colonnes de rayonnages (2 - 5) respectivement opposées l'une à côté de l'autre de part et d'autre d'un puits de transport (15) et dont les parois latérales sont munies d'âmes de dépôt (27), disposées l'une au-dessus de l'autre et à faible distance l'une de l'autre, pour supporter des supports de marchandises à entreposer (12), avec un transporteur (26) guidé dans un cadre porteur (18), muni d'un dispositif de transport horizontal et déplaçable verticalement et horizontalement dans le puits de transport (15), transporteur au moyen duquel des supports de marchandises à entreposer (12) peuvent être transférés d'une ouverture de chargement et de prélèvement (10,11) se trouvant dans une colonne de rayonnages à des emplacements d'entreposage des colonnes de rayonnages (2 - 5) et repris à partir de ceux-ci, ainsi qu'avec une grille de lumière (14) prévue dans la région des ouvertures de chargement et de prélèvement (10, 11) pour la détermination de la hauteur optimale de la marchandise à entreposer (13), qui doit être entreposée de manière optimisée en hauteur, **caractérisé en ce que** le transporteur (26) est, de façon connue en soi, monté de façon déplaçable vers le haut et vers le bas dans le cadre porteur (18) et celui-ci est, également de façon connue en soi, guidé à son tour en déplacement horizontal sur au moins deux rails de guidage (16, 17), dont un (16) est fixé au sol (23) du puits de transport (15) et un (17) est disposé dans la région supérieure du puits de transport (15), et **en ce que** les colonnes de rayonnages (2 - 5) présentent chacune quatre montants d'angle (25), et **en ce qu'**au moins certaines des extrémités supérieures des montants d'angle (25) de colonnes de rayonnages opposées (par exemple 3a, 3b) sont reliées l'une à l'autre par des traverses (24) enjambant le puits de transport (15) et qui servent pour la fixation du rail de guidage supérieur (17) destiné au guidage du cadre porteur (18).

2. Ascenseur d'entrepôt selon la revendication 1, **caractérisé en ce que** le cadre porteur (18) comprend au moins deux poutres verticales (19, 20) ainsi que deux poutres horizontales (21, 22) orientées en direction longitudinale du puits de transport (15) et reliant celles-ci l'une à l'autre dans le haut et dans le bas, et **en ce que** les poutres verticales (19, 20) sont pourvues de guidages pour le transporteur (26) supportant la marchandise à entreposer (13) et déplaçable entre eux vers le haut et vers le bas.

3. Ascenseur d'entrepôt selon la revendication 2, **caractérisé en ce que** des parties de l'enceinte (1), fermant des extrémités opposées du puits de transport (15), sont réalisées sous forme de puits d'entretien (8, 9), dans lesquels la poutre verticale (19 ou 20) du cadre porteur (18) qui leur est respectivement opposée peut être déplacée.

4. Ascenseur d'entrepôt selon la revendication 3, **caractérisé en ce que** les puits d'entretien (8, 9) s'étendent sur toute la hauteur et toute la profondeur de l'enceinte (1).

5. Ascenseur d'entrepôt selon la revendication 3 ou 4, **caractérisé en ce que** le cadre porteur (18) est pourvu, sur au moins un de ses côtés tournés vers les puits d'entretien (8, 9), d'une échelle (29, 30) s'étendant pratiquement sur toute la hauteur de l'enceinte (1) et pouvant être transférée dans la région d'un puits d'entretien (8 ou 9).

6. Ascenseur d'entrepôt selon l'une quelconque des revendications 1 à 5, **caractérisé en ce qu'**il présente un nombre quelconque de paires de colonnes de rayonnages opposées (2 - 5) disposées les unes à côté des autres.

7. Ascenseur d'entrepôt selon l'une quelconque des revendications 2 à 6, **caractérisé en ce que** le transporteur (26) prend appui, sur ses côtés opposés, sur les poutres verticales (19, 20) au moyen d'au moins chaque fois deux paires de galets de guidage (28) disposés les uns au-dessus des autres et à distance les uns des autres.
